# EUROPEAN PATENT SPECIFICATION

(11) **EP 3 869 496 B1**
(45) Date of publication and mention of the grant of the patent: **05.03.2025**
(21) Application number: 19874228.0
(22) Date of filing: 20.09.2019
(51) Int. Cl.: G10K 11/16, G10K 11/162, G10K 11/172, F01N 1/02, F16L 55/033, F24F 13/24

(54) **SOUNDPROOFING SYSTEM**
SCHALLSCHUTZANLAGE
SYSTÈME D'INSONORISATION

(30) Priority: 19.10.2018 JP 2018197418
(43) Date of publication of application: 25.08.2021
(73) Proprietor: FUJIFILM Corporation, Tokyo 106-8620 (JP)
(72) Inventor: SUGAWARA, Yoshihiro, Kanagawa 258-8577 (JP); YAMAZOE, Shogo, Kanagawa 258-8577 (JP); HAKUTA, Shinya, Kanagawa 258-8577 (JP); OHTSU, Akihiko, Kanagawa 258-8577 (JP)
(74) Representative: Meissner Bolte Partnerschaft mbB
(86) International application number: PCT/JP2019/037067
(87) International publication number: WO 2020/080040

(56) References cited:
- WO-A1-2004/061817
- WO-A1-2013/114807
- GB-A- 2 546 792
- JP-A- 2008 058 389
- JP-U- H0 614 422
- JP-U- H0 650 097
- US-A1- 2017 082 067
- US-B2- 9 970 340

## Description

### BACKGROUND OF THE INVENTION

### 1. Field of the Invention

The present invention relates to a soundproof system.

### 2. Description of the Related Art

In an information device, such as a personal computer (PC), a duplicator, and the like, in order to cool the inside of the device, a fan is used to exhaust the heated air in the device.

Of the noise generated from such a cooling fan, the noise of which a frequency is determined by the number of blades and the rotation speed has a high sound pressure at a specific frequency and a very strong pure tone (tone) component, which is jarring and causes a problem.

In order to reduce such noise, even in a case in which a porous sound absorbing material generally used for sound silencing is used, the volume is uniformly lowered in a wide frequency band. Therefore, in a case in which the sound pressure is high only at a specific frequency as described above, it is difficult to relatively lower the sound pressure of the specific frequency.

Further, in a case in which the porous sound absorbing material is used, it is necessary to increase the volume in order to obtain a sufficient sound silencing effect, but since it is necessary to ensure the ventilation property of a ventilation passage, a size of the porous sound absorbing material is limited, and there is a problem that it is difficult to achieve both high ventilation property and soundproofing performance.

In order to silence such noise of a specific frequency, it has been proposed to use a resonance type silencer.

For example, WO2004/061817 discloses a silencer including a housing having a flat housing shape and having a passage for performing silencing processing formed therein, and a hole portion formed in the housing so as to communicate with the passage and into which a sound wave to be noise are introduced, in which the hole portion is formed on the outer peripheral side of the housing and the sound wave to be noise travel in the surface direction of the housing. It is also disclosed that the silencer performs resonance sound absorption.
WO 2013/114807 A1 discloses that a noise control device comprises a Helmholtz resonator that resonates at a frequency derived from tube resonance in an air duct. WO 2004/061817 A1 discloses that a silencer is disposed in a duct and between a fan and a duct exit. JP H 06 50097 discloses a noise reduction device for reducing intake noise and exhaust noise of an automotive engine. US 9 970 340 B2 discloses a vehicle exhaust system that includes an exhaust component having an outer surface and an inner surface that defines an internal exhaust component cavity, wherein a bleed hole is formed in the exhaust component to reduce a resonance frequency. GB 2 546 792 A discloses a silencer that comprises a duct having an inner surface defining a bore, an outer surface exposed to the external atmosphere, and a plurality of micropassages for converting acoustic energy within the gas flow into thermal energy. US 2017/082067 A1 discloses a pulse combustor system for reducing noise and/or vibration levels by adjusting a rate of fuel supply to the pulse combustor.

### SUMMARY OF THE INVENTION

In order to reduce the noise of the fan as described above, it is required to soundproof a sound of a frequency in a specific narrow band without deteriorating the ventilation property related to the cooling performance.

However, according to the study by the present inventors, it has been found that in a case in which the silencer is installed while ensuring the ventilation property, the sound silencing performance may deteriorate depending on the location.

An object of the present invention is to solve the problems in the related art described above and to provide a soundproof system having high sound silencing performance at a specific frequency while ensuring ventilation property.

The present invention is defined by independent claim 1 as appended. Further embodiments are given in the dependent claims.

According to the present invention, it is possible to provide a soundproof system having high sound silencing performance at a specific frequency while ensuring ventilation property.

### BRIEF DESCRIPTION OF THE DRAWINGS

Fig. 1 is a cross sectional view conceptually showing an example of a soundproof system according to an embodiment of the present invention.
Fig. 2 is a schematic diagram for explaining an effect of the soundproof system according to the embodiment of the present invention.
Fig. 3 is a schematic diagram for explaining the effect of the soundproof system according to the embodiment of the present invention.
Fig. 4 is a schematic diagram for explaining a range of a distance L between a high impedance space and a low impedance space.
Fig. 5 is a graph showing a relationship between a frequency and a sound pressure level of a microphone.
Fig. 6 is a diagram that visualizes a sound pressure in the periphery of a fan.
Fig. 7 is a schematic diagram showing an example of the soundproof system according to the embodiment of the present invention.
Fig. 8 is a schematic diagram showing another example of the soundproof system according to the embodiment of the present invention.
Fig. 9 is a schematic diagram showing still another example of the soundproof system according to the embodiment of the present invention.
Fig. 10 is a schematic diagram showing still another example of the soundproof system according to the embodiment of the present invention.
Fig. 11 is a schematic diagram showing still another example of the soundproof system according to the embodiment of the present invention.
Fig. 12 is a schematic diagram showing still another example of the soundproof system according to the embodiment of the present invention.
Fig. 13 is a schematic diagram showing still another example of the soundproof system according to the embodiment of the present invention.
Fig. 14 is a schematic diagram showing still another example of the soundproof system according to the embodiment of the present invention.
Fig. 15 is a diagram for explaining a simulation model.
Fig. 16 is a graph showing a relationship between the frequency and a transmission loss.
Fig. 17 is a graph showing a relationship between the distance L and the transmission loss.
Fig. 18 is a schematic diagram showing still another example of the soundproof system according to the embodiment of the present invention.
Fig. 19 is a graph showing a relationship between the frequency and the sound pressure.
Fig. 20 is a schematic diagram showing still another example of the soundproof system according to the embodiment of the present invention.
Fig. 21 is a schematic diagram showing still another example of the soundproof system according to the embodiment of the present invention.
Fig. 22 is a schematic diagram for explaining a vibration mode of film vibration.
Fig. 23 is a schematic diagram for explaining a vibration mode of film vibration.
Fig. 24 is a schematic diagram showing still another example of the soundproof system according to the embodiment of the present invention.
Fig. 25 is a schematic diagram for explaining a configuration of Example.
Fig. 26 is a cross sectional view at a position of a film type resonator of Fig. 25.
Fig. 27 is a schematic diagram for explaining a configuration of the film type resonator.
Fig. 28 is a graph showing a relationship between the frequency and the sound pressure and a relationship between the frequency and absorbance.
Fig. 29 is a graph showing a relationship between the frequency and the sound pressure and a relationship between the frequency and absorbance.
Fig. 30 is a graph showing a relationship between the distance L and the transmission loss.
Fig. 31 is a schematic diagram for explaining a configuration of Example.
Fig. 32 is a cross sectional view at a position of the film type resonator of Fig. 31.
Fig. 33 is a schematic diagram for explaining a configuration of the film type resonator.
Fig. 34 is a graph showing a relationship between a difference from a peak noise frequency of the fan and the sound pressure.
Fig. 35 is a graph showing a relationship between a difference from the peak noise frequency of the fan and the sound pressure.
Fig. 36 is a graph showing a relationship between the distance L and the transmission loss.

### DESCRIPTION OF THE PREFERRED EMBODIMENTS

The present invention will be described below in detail.

The description of the configuration elements described below is based on the typical embodiment of the present invention, but the present invention is not limited to such an embodiment.

Note that, in the present specification, the numerical range represented by "to" means a range including numerical values denoted before and after "to" as a lower limit value and an upper limit value.

Also, in the present specification, "orthogonal" and "parallel" include a range of errors accepted in the technical field to which the present invention belongs. For example, "orthogonal" and "parallel" mean that the it is within a range of less than ±10° with respect to strict orthogonality or parallelism, and the error with respect to strict orthogonality or parallelism is preferably 5° or less, and more preferably 3° or less.

In the present specification, "the same" includes the error range generally accepted in the technical field. Further, in the present specification, in a case in which the term "every", "all" or "entirely" is used, it includes, in addition to a case of 100%, the error range generally accepted in the technical field for example, a case of being 99% or more, 95% or more, or 90% or more.

### [Soundproof System]

A soundproof system according to an embodiment of the present invention is a soundproof system that silences a sound generated from a sound source which is disposed in a ventilation member having a ventilation passage, in which the sound generated from the sound source is at least one dominant sound of which a sound pressure at a specific frequency is a maximum value, at least a part of a high impedance space in which an acoustic impedance is higher than an average value of an acoustic impedance of the flow passage exists within a distance of ± 0.25 × λ from the sound source in a flow direction of the ventilation passage, the soundproof system comprises a silencer that is disposed in the ventilation member and silences a sound in a frequency band including a frequency of the dominant sound, the silencer forms a low impedance space in which the acoustic impedance is lower than the average value of the impedance of the flow passage to form a low impedance interface in which a sound wave is reflected, and assuming that a center wavelength of the dominant sound is λ and m is a positive integer, a distance L between the high impedance space and the low impedance space satisfies (0.5 × λ × m - 0.2 × λ) < L < (0.5 × λ × m + 0.2 × λ).

The configuration of the soundproof system according to the embodiment of the present invention will be described with reference to the drawings.

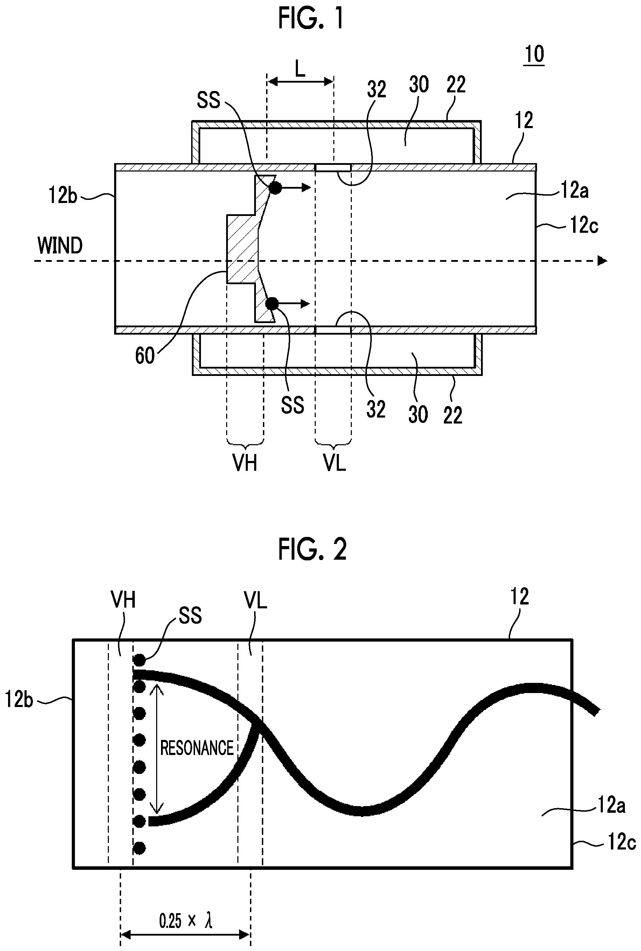

Fig. 1 is a schematic cross sectional view showing an example of a soundproof system according to a preferred embodiment of the present invention.

The soundproof system 10 shown in Fig. 1 includes a ventilation member 12 that has a ventilation passage 12a, a fan 60 that is disposed inside the ventilation member 12, and a silencer 22 that is disposed in an outer peripheral portion of the ventilation member 12.

In the soundproof system 10 shown in Fig. 1, the ventilation member 12 is a tubular member with both ends open, a space therein is used as the ventilation passage 12a, and gas (air) is introduced from one opening (hereinafter, referred to as air supply opening 12b) and is exhausted from the other opening (hereinafter, referred to as exhaust opening 12c).

The fan 60 is disposed inside the ventilation member 12, that is, in the ventilation passage 12a, and blows gas from the air supply opening 12b side to the exhaust opening 12c side.

As is well known, the fan 60 rotates an impeller having a plurality of blades to impart kinetic energy to the gas and blow the gas in an axial direction. Therefore, the fan 60 generates a sound of which a sound pressure is a maximum value at a specific frequency, which is determined by the rotation speed and the number of blades. That is, the fan 60 is a sound source SS in the embodiment of the present invention. Hereinafter, the sound of which the sound pressure is the maximum value at the specific frequency is referred to as a dominant sound.

The silencer 22 is disposed on the outer peripheral portion of the ventilation member 12 and silences the sound having a frequency including the dominant sound generated from the sound source SS.

In the example shown in Fig. 1, the silencer 22 is a Helmholtz resonator and has a cavity portion 30 and an opening portion 32 that communicates the cavity portion 30 with the inside of the ventilation member 12 (ventilation passage 12a). As is well known, by matching a resonance frequency of the Helmholtz resonator to the frequency of the sound to be silenced (dominant sound), the Helmholtz resonator can silence the sound of that frequency.

Further, the opening portion 32 is formed between the fan 60 and the exhaust opening 12c in a flow direction of the ventilation passage 12a. That is, the silencer 22 is disposed on the downstream side of the fan 60 to silence the dominant sound generated by the fan 60.

Here, in the example shown in Fig. 1, a region in which the fan 60 is disposed corresponds to a high impedance space VH in the embodiment of the present invention, and a region in which the opening portion 32 of the silencer 22 is disposed corresponds to a low impedance space VL.

In the present invention, the high impedance space is a space (region) in which the acoustic impedance is higher than an average value of an acoustic impedance of the flow passage 12a.

Further, the low impedance space is a space (region) in which the acoustic impedance is lower than the average value of the acoustic impedance of the flow passage 12a.

Generally, the acoustic impedance Z₀ of a pipe line is represented by Z₀ = ρ × c/S. Here, ρ is the air density, c is the speed of sound, and S is the cross section area of the pipe line.

In the region in which the fan 60 is disposed, the cross section area S of the pipe line is small, and thus the acoustic impedance is high.

On the other hand, in the region in which the opening portion 32 of the silencer 22 is disposed, the air in the pipe line can move into the silencer 22, so that the same effect as the decrease in the air density ρ occurs. Accordingly, the acoustic impedance is low.

Specifically, the average value of the acoustic impedance of the ventilation passage can be obtained by ρ × c/(the average cross section area of a normal portion of the ventilation passage).

Further, the high impedance space VH is a space in which the acoustic impedance is higher than the average value of the acoustic impedance of the ventilation passage by 20% or more. That is, the high impedance space has an average cross section area narrowed by 20% or more with respect to the ventilation passage. Therefore, it is possible to determine whether or not the space is the high impedance space by obtaining the opening cross section area in the ventilation passage.

Further, the low impedance space VL is a space in which a silencer (resonant body, extended silencer) is provided. Therefore, it is possible to determine whether or not the space is the low impedance space depending on the presence or absence of the silencer.

A boundary between the high impedance space VH and the low impedance space VL, and the ventilation passage is an interface in which a change of 20% of the acoustic impedance occurs within λ/20.

Further, in a case in which a through hole is provided on the side surface or the like of the ventilation member, it is considered that there is no through hole (the side surface of the through hole portion is smoothly connected), and the average value of the acoustic impedance of the ventilation passage need only be obtained.

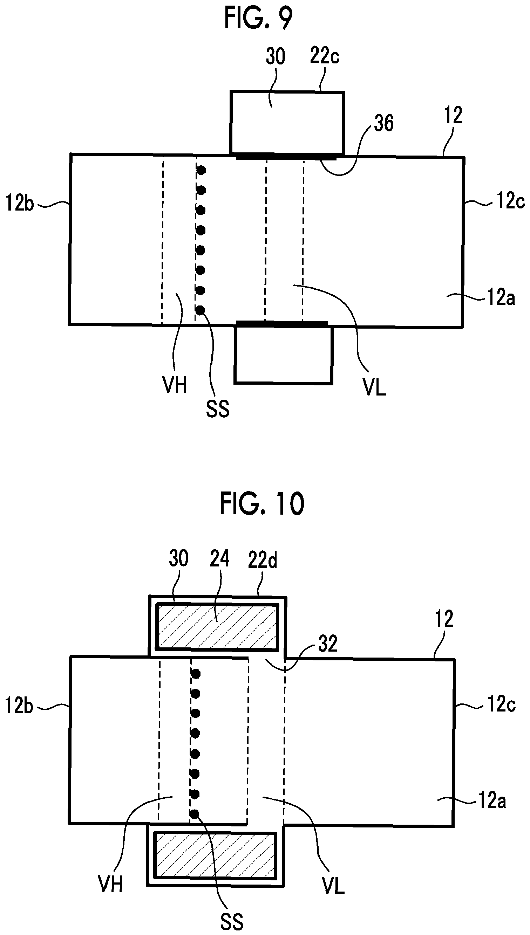

Further, the extended silencer silences the sound by expanding the cross section area of the ventilation passage or installing a sound absorbing material in at least a part of the expanded portion, and the configuration shown in Fig. 10 described below corresponds to this.

Therefore, in the sound silencing system 10 shown in Fig. 1, in the flow direction (left and right direction in Fig. 1) of the ventilation passage 12a, the high impedance space VH exists close to the intake opening 12b side of the sound source SS and the silencer 22 that forms the low impedance space VL exists on the downstream side (exhaust opening 12c side) of the high impedance space VH and the sound source SS.

Here, in the present invention, assuming that a center wavelength of the dominant sound is λ and m is a positive integer, a distance L between the high impedance space VH and the low impedance space VL exists in a range satisfying (0.5 × λ × m - 0.2 × λ) < L < (0.5 × λ × m + 0.2 × λ).

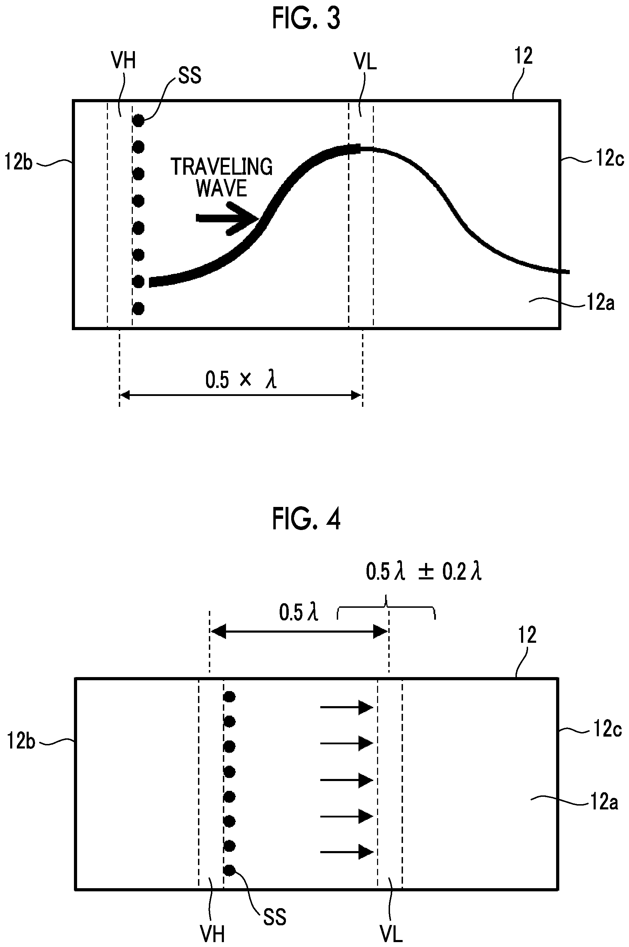

Hereinafter, this point will be described with reference to Figs. 2 and 3.

Figs. 2 and 3 are cross sectional views schematically showing a positional relationship between the high impedance space VH, the sound source SS, and the low impedance space VL in the ventilation passage 12a. Although the silencer 22 is not shown in Figs. 2 and 3, the silencer 22 is disposed at the position of the low impedance space VL in the flow direction of the ventilation passage 12a.

First, in a case in which the high impedance space VH exists in the vicinity of the sound source SS, the dominant sound generated from the sound source SS is more strongly emitted to the exhaust opening 12c side. Therefore, in order to silence the dominant sound emitted from the exhaust opening 12c to the outside of the ventilation passage 12a, the silencer 22 is disposed between the sound source SS and the exhaust opening 12c.

In this case, as shown in Fig. 2, in a case in which the distance L between the high impedance space VH and the low impedance space VL is disposed at a position of 1/4 of the center wavelength λ of the dominant sound generated from the sound source, the high impedance space VH is a free end of the sound pressure and the low impedance space VL is a fixed end of the sound pressure, a resonance condition of λ/4 resonance is established, and the λ/4 resonance occurs in the space between the high impedance space VH and the low impedance space VL. As a result, in the low impedance space VL, the sound pressure is a node and a sound pressure value is small, so that the effect on the silencer is weakened, and the sound silencing effect by the resonator 22 cannot be sufficiently obtained.

Such an effect also occurs at the position of λ/4 + m × λ/2 (m is a positive integer). That is, in a case in which the position of the low impedance space VL matches the position of the node of the dominant sound, the resonance occurs in the space between the high impedance space VH and the low impedance space VL as described above, and the sound pressure at the resonator position is small, the sound silencing effect by the resonator 22 cannot be sufficiently obtained.

On the other hand, as shown in Fig. 3, in a case in which the distance L between the high impedance space VH and the low impedance space VL is disposed at a position of 1/2 of the center wavelength λ of the dominant sound generated from the sound source, the high impedance space VH is a free end of the sound pressure and the low impedance space VL is a fixed end of the sound pressure, a resonance condition of λ/2 resonance is not established, and the λ/2 resonance does not occur in the space between the high impedance space VH and the low impedance space VL. Therefore, the sound silencing effect can be sufficiently obtained by the reflection and absorption by the silencer 22 positioned at the position of the low impedance space VL.

Also, such an effect also occurs at the position of λ/2 × m (m is a positive integer). That is, in a case in which the position of the low impedance space VL matches the position of the antinode of the dominant sound, the resonance does not occur in the space between the high impedance space VH and the low impedance space VL as described above, and the sound silencing effect by the resonator 22 can be sufficiently obtained.

According to the study by the present inventors, the range in which the resonance does not occur in the space between the high impedance space VH and the low impedance space VL and the sound silencing effect by the silencer 22 can be sufficiently obtained is the range of 0.5 × λ ± 0.2 × λ as shown in Fig. 4.

As described above, in the information device, in order to reduce the noise of the fan used for cooling the inside of the device, it is required to soundproof a sound of a frequency in a specific narrow band without deteriorating the ventilation property related to the cooling performance.

However, according to the study by the present inventors, it has been found that in a case in which the silencer is installed while ensuring the ventilation property, the sound silencing performance may deteriorate depending on the location, as described above.

On the other hand, in the soundproof system according to the embodiment of the present invention, the high impedance space in which the acoustic impedance is higher than the average value of the acoustic impedance of the flow passage exists within a distance of ± 0.25 × λ of the sound source in the flow direction of the ventilation passage, the soundproof system includes the silencer that is disposed in the ventilation member and silences the dominant sound, the silencer forms the low impedance space in which the acoustic impedance is lower than the average value of the impedance of the flow passage, and assuming that the center wavelength of the dominant sound is λ and m is a positive integer, the distance L between the high impedance space and the low impedance space satisfies (0.5 × λ × m - 0.2 × λ) < L < (0.5 × λ × m + 0.2 × λ). Therefore, as described above, the sound silencing effect due to the silencer can be sufficiently exhibited.

Accordingly, the soundproof system according to the embodiment of the present invention can improve sound silencing performance at a specific frequency while ensuring ventilation property.

Further, from the viewpoint of miniaturization of the soundproof system, it is more preferable that the distance L between the high impedance space and the low impedance space satisfy (0.5 × λ - 0.2 × λ) < L < (0.5 × λ + 0.2 × λ).

The distance L between the high impedance space and the low impedance space need only be obtained based on the position in which cross section area starts to change for the high impedance space, and the opening or the center position of vibration (the vibration center position of the particle velocity) for the low impedance space. Further, in a case in which the silencer forming the low impedance space is the film type resonator and there are a plurality of vibration points in the higher order vibration mode, the center position of the vibration is used as a reference.

Further, in the shown example, a configuration is adopted in which the high impedance space and the sound source are disposed close to each other, but the present invention is not limited to this, and the distance between the high impedance space and the sound source need only be within ±0.25 × λ. In a case in which the distance between the high impedance space and the sound source is within ±0.25 × λ, the sound wave immediately after being generated from the sound source propagates to the high impedance space, but in this case, the sound wave does not become a plane wave in a near field state, and the effect of reflection due to the high impedance space is small. Therefore, the influence of the interference effect depending on the positional relationship between the sound source and the high impedance space is small, and in a case in which the distance between the high impedance space and the sound source is within ±0.25 × λ, considering the positional relationship between the high impedance space and the low impedance space, the effect of the silencer can be improved.

That is, in a case in which the distance between the high impedance space and the sound source is within ±0.25 × λ, the performance of the silencer can be exhibited by setting the distance L between the high impedance space and the low impedance space within the range described above.

A state in which the sound wave is in the near field state is as follows.

In the duct, the sound wave propagates in the axial direction of the duct eventually. That is, the sound wave has the directionality. However, the directionality of the sound wave generated from the sound source that is not flat over the entire cross section of the duct is not defined immediately after the sound wave is generated, and after propagating for a certain distance or more, it becomes a plane wave and the directionality is determined. The sound wave of which the directionality is not determined immediately after the sound wave is generated is called the near field state.

Further, a configuration may be adopted in which the sound source is disposed in the high impedance space. For example, in a case in which a rectifying member that rectifies airflow is provided on the surface of the fan, a configuration is adopted in which the space in which the fan and the rectifying member are disposed is the high impedance space, and the fan as the sound source is disposed in the high impedance space.

Further, in the present invention, the dominant sound is a sound having a tone-to-noise ratio (TNR) defined by the European standard ECMA-74 as a prominent discrete tone or a prominence ratio (PR) of 3 dB or more.

Hereinafter, each component of the soundproof system according to the embodiment of the present invention will be described in detail.

### <Ventilation Member>

The ventilation member 12 has the ventilation passage 12a through which gas (air) flows in a predetermined direction.

In the example shown in Fig. 1, the ventilation member 12 is a tubular member with both ends open, but the present invention is not limited to this, and the opening (through hole) is provided in a part of a peripheral surface of the tubular member.

Further, in the example shown in Fig. 1, the ventilation passage 12a of the ventilation member 12 is linear, but the present invention is not limited to this, and the ventilation passage 12a may include a bent portion.

Further, the cross sectional shape of the ventilation passage 12a may be various shapes, such as a circular shape, a quadrangular shape, or a triangular shape.

The cross sectional shape and the cross section area of the ventilation passage 12a are uniform in the flow direction, but the present invention is not limited to this, and the cross sectional shape and the cross section area of the ventilation passage 12a may be changed in the flow direction.

The cross section area and length of the ventilation passage 12a need only be set depending on the size of the information device in which the soundproof system is used, the required cooling performance, and the like. In a case of a configuration in which the soundproof system has the fan, the cross section area of the ventilation passage 12a is preferably 0.7 to 1.5 times of the cross section area of the portion in which the fan blade is present, preferably 0.8 to 1.4 times, and more preferably 1.0 to 1.2 times. A length of the ventilation passage 12a is preferably 0.01 to 1 m, preferably 0.03 to 0.5 m, and more preferably 0.05 to 0.3 m.

Also, the ventilation member 12 (ventilation passage 12a) may be formed by using a part of the housing of the device.

### <Sound Source>

In the ventilation passage 12a, the sound source SS exists.

As the sound source SS that exists in the ventilation passage 12a, in a case in which the opening portion and/or a protrusion portion exists on the side surface of the ventilation passage 12a, a wind noise is generated due to the flow of gas (air), the opening portion and/or the protrusion portion can also be the sound source SS in addition to the fan 60 described above. Such a wind noise is also the dominant sound of which the sound pressure at the specific frequency is the maximum value.

In the information device or the like, it is preferable that the soundproof system according to the embodiment of the present invention be applied to the dominant sound generated by the fan used for cooling the inside of the device.

### (Fan)

The fan 60 is not particularly limited as long as the inside of the device can be cooled, and various fans, such as an axial fan, a propeller fan, a blower fan, a sirocco fan, or a cross flow fan, can be used. Among these, the soundproof system is suitably applicable in a case in which an axial fan capable of blowing air in a direction parallel to the rotation axis of the fan is used.

### [High Impedance Space]

The high impedance space VH is a space (region) in which the acoustic impedance is higher than the average value of the acoustic impedance of the ventilation passage 12a, as described above.

In the example shown in Fig. 1, the high impedance space VH is formed by reducing the cross section area of the pipe line in the region in which the fan 60 is disposed, but the present invention is not limited to this. For example, the high impedance space VH may be formed by having a region in which the cross section area of the ventilation passage 12a is narrowed in the middle of the flow direction.

In a case in which the sound source SS is the fan 60, the high impedance space VH is formed at the position of the fan 60, and thus it is not necessary to separately form the high impedance space.

On the other hand, in the case in which the sound source SS has the opening portion and/or the protrusion portion that generates wind noise, the high impedance space VH need only be formed to have a configuration having a region in which the cross section area of the ventilation passage 12a is narrowed in the middle of the flow direction, as described above. In such a case, a configuration can be adopted in which the position of the sound source SS and the position of the high impedance space VH in the flow direction are separated from each other.

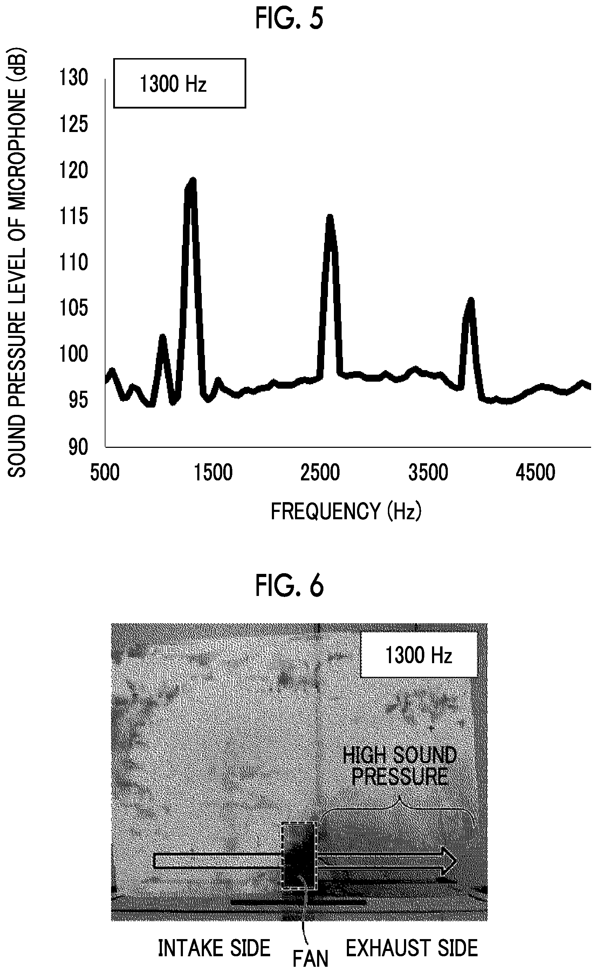

Here, the point that the sound generated from the sound source SS has the directionality due to the sound source SS and the high impedance space VH will be described with reference to Figs. 5 and 6.

Fig. 5 is a graph showing a relationship between the frequency of the fan used in the experiment and the measured sound pressure level. As shown in Fig. 5, the fan shows the sound pressure having the maximum value at 1300 Hz, 2600 Hz, and 3900 Hz. That is, the sound of 1300 Hz, 2600 Hz, and 3900 Hz is the dominant sound generated by the fan.

Fig. 6 is a diagram that visualizes the sound pressure distribution in the space in the periphery of the fan. The frequency for obtaining the sound pressure distribution is 1300 Hz. Further, as shown by an arrow in Fig. 6, the fan is disposed to blow air from left to right in Fig. 6.

As shown in Fig. 6, it can be seen that the sound pressure at the frequency of 1300 Hz is high in the space on the right side of the fan, that is, the space on the exhaust side. This is because the position in which the fan is disposed is the high impedance space VH, so that the sound generated by the fan, which is the sound source SS, is emitted in the direction opposite to the high impedance space VH.

As described above, in a case in which the high impedance space exists on one side of the sound source SS, the sound is strongly emitted in the direction opposite to the high impedance space.

### <Silencer>

The silencer 22 is disposed on the outer peripheral portion of the ventilation member 12 and silences the sound having a frequency including the dominant sound generated from the sound source SS. Further, the silencer 22 forms the low impedance space VL.

The silencer 22 is not particularly limited as long as it can silence the sound having the frequency including the dominant sound and can form the low impedance space VL. Examples of the silencer capable of forming the low impedance space include the Helmholtz resonator, an air column resonator, a film type resonator, and a non-resonant silencer.

### (Helmholtz Resonator)

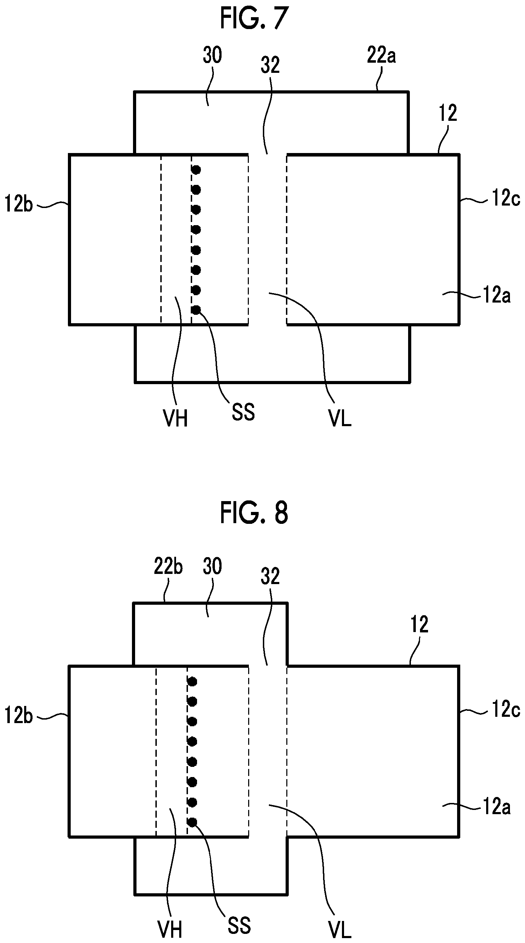

Fig. 7 shows an example of the soundproof system in which the Helmholtz resonator 22a is disposed on the outer peripheral portion of the ventilation member 12 as the silencer.

Helmholtz resonance is a phenomenon in which the air in the cavity portion 30 communicating with the outside at the opening portion 32 acts as a spring and resonates. The Helmholtz resonator 22a has a structure in which the air in the opening portion 32 acts as a mass and the air in the cavity portion 30 acts as a spring, the mass and spring resonate, and the sound is absorbed by thermal viscous friction near the wall of the opening portion 32.

As shown in Fig. 7, the opening portion 32 of the Helmholtz resonator 22a is provided to communicate with the inside of the ventilation member 12 (ventilation passage 12a), and with respect to the dominant sound generated from the sound source SS in the ventilation member 12, resonance phenomenon is utilized to express at least one function of sound absorption or reflection, and selectively silence the dominant sound.

In a case in which the Helmholtz resonator is used as the silencer 22, the resonance frequency of the Helmholtz resonance need only be appropriately set to silence the dominant sound generated from the sound source SS. The resonance frequency of Helmholtz resonance is determined by the internal volume of the cavity portion 30, the area of the opening portion 32, and the like. Therefore, the frequency of the resonating sound can be appropriately set by adjusting the internal volume of the cavity portion 30 of the Helmholtz resonator 22a, the area of the opening portion 32, and the like.

### (Air Column Resonator)

Fig. 8 shows an example of the soundproof system in which an air column resonator 22b is disposed on the outer peripheral portion of the ventilation member 12 as the silencer.

Air column resonance occurs due to generation of standing wave in a closed resonance pipe (cavity portion 30).

As shown in Fig. 8, the opening portion 32 of the air column resonator 22b is provided to communicate with the inside of the ventilation member 12 (ventilation passage 12a), and with respect to the dominant sound generated from the sound source SS in the ventilation member 12, resonance phenomenon is utilized to express at least one function of sound absorption or reflection, and selectively silence the dominant sound.

In a case in which the air column resonator is used as the silencer 22, the resonance frequency of the air column resonance need only be appropriately set to silence the dominant sound generated from the sound source SS. The resonance frequency of the air column resonance is determined by the length of the resonance pipe (depth from the opening portion 32 of the cavity portion 30) and the like. Therefore, the frequency of the resonating sound can be appropriately set by adjusting the depth of the cavity portion 30, the size of the opening portion 32, and the like.

Whether the silencer 22 having the opening portion 32 and the cavity portion 30 has the resonance structure causing air column resonance or the resonance structure causing Helmholtz resonance is determined depending on the size and position of the opening portion, the size of the cavity portion 30, and the like. Therefore, by adjusting these appropriately, it is possible to select whether the air column resonance or the Helmholtz resonance is adopted as the resonance structure.

In the case of air column resonance, in a case in which the opening portion is narrow, the sound wave is reflected at the opening portion and it is difficult for the sound wave to enter the cavity portion, and thus it is preferable that the opening portion be wide to some extent. Specifically, in a case in which the opening portion has a rectangular shape, the length of the short side is preferably 1 mm or more, more preferably 3 mm or more, and further preferably 5 mm or more. In a case in which the opening portion has a circular shape, it is preferable that the diameter be in the range described above.

On the other hand, in the case of Helmholtz resonance, it is necessary to generate thermal viscous friction at the opening portion, and thus it is preferable that the opening portion be narrow to some extent. Specifically, in a case in which the opening portion has a rectangular shape, the length of the short side is preferably 0.5 mm or more and 20 mm, more preferably 1 mm or more and 15 mm or less, and further preferably 2 mm or more and 10 mm or less. In a case in which the opening portion has a circular shape, it is preferable that the diameter be in the range described above.

### (Film Type Resonator)

Fig. 9 shows an example of the soundproof system in which a film type resonator 22c is disposed on the outer peripheral portion of the ventilation member 12 as the silencer.

The film type resonator 22c causes resonance to occur in a case in which a film 36 vibratingly supported vibrates.

As shown in Fig. 9, the film 36 of the film type resonator 22c is provided to face the inside of the ventilation member 12 (ventilation passage 12a), and with respect to the dominant sound generated from the sound source SS in the ventilation member 12, resonance phenomenon is utilized to express at least one function of sound absorption or reflection, and selectively silence the dominant sound.

In the film type resonator 22c using film vibration, the resonance frequency of the film vibration need only be appropriately set to silence the dominant sound generated from the sound source SS. The resonance frequency of the film vibration is determined by the size (size of the vibrating surface), the thickness, the hardness, and the like of the film 36. Therefore, the frequency of the resonating sound can be appropriately set by adjusting the size, the thickness, the hardness, and the like of the film 36.

Further, as shown in Fig. 9, the film type resonator 22c has the cavity portion 30 (hereinafter, also referred to as a rear space) on the rear side (opposite side of the ventilation passage 12a) of the film 36. Since the cavity portion 30 is closed, sound absorption occurs due to the interaction between the film vibration and the rear space.

Specifically, the film vibration has a frequency band of a basic vibration mode and a higher order vibration mode determined by the conditions of the film (thickness, hardness, size, fixing method, and the like), and determination is made as to which mode of frequency is strongly excited to contribute to sound absorption, by the thickness of the rear space and the like. In a case in which the thickness of the rear space is thin, the effect is obtained in which the rear space is qualitatively hardened, so that it becomes easy to excite the higher order vibration mode of the film vibration.

Here, the film 36 of the film type resonator 22c disposed on the outer peripheral portion of the ventilation member 12 vibrates, so that the same effect as reducing the density ρ of the air in the ventilation passage 12a occurs. Therefore, the acoustic impedance in the region in which the film type resonator 22c is disposed is low.

### (Non-resonant Silencer)

Fig. 10 shows an example of the soundproof system in which a non-resonant silencer 22d that does not use resonance is disposed on the outer peripheral portion of the ventilation member 12 as the silencer.

The non-resonant silencer 22d shown in Fig. 10 has the cavity portion 30, the opening portion 32 communicating with the ventilation passage 12a, and a porous sound absorbing material 24 disposed in the cavity portion 30.

The non-resonant silencer 22d silences sound by converting sound energy into heat energy by the porous sound absorbing material 24.

The porous sound absorbing material 24 is not particularly limited, and a well-known porous sound absorbing material can be appropriately used. For example, various well-known porous sound absorbing material can be used such as foam materials and materials containing minute air such as urethane foam, soft urethane foam, wood, ceramic particle sintered material, phenol foam, and the like; fibers and nonwovens such as glass wool, rock wool, microfibers (Thinsulate manufactured by 3M), floor mats, carpets, meltblown nonwovens, metal nonwovens, polyester nonwovens, metal wool, felt, insulation boards and glass nonwovens, and wood wool cement board, nanofiber materials such as silica nanofiber, gypsum board, and the like.

A flow resistance of the porous sound absorbing material is not particularly limited, but is preferably 1000 to 100,000 (Pa · s/m²), more preferably 5000 to 80,000 (Pa · s/m²), and further preferably 10,000 to 50,000 (Pa · s/m²).

The flow resistance of the porous sound absorbing material can be evaluated by measuring a vertical incident sound absorbance of the porous sound absorbing material having a thickness of 1 cm and fitting by the Miki model (J. Acoust. Soc. Jpn., 11(1), pp. 19 to 24 (1990)). Alternatively, evaluation may be made according to "ISO 9053".

Further, a plurality of porous sound absorbing materials having different flow resistances may be stacked.

From the viewpoint of selectively silencing the dominant sound generated from the sound source SS, it is preferable that the resonance type silencer, that is, the Helmholtz resonator, the air column resonator, or the film type resonator be used as the silencer 22. The dominant sound can be selectively silenced to reduce the sound pressure difference with other wavelength ranges.

The soundproof system according to the embodiment of the present invention may have a configuration in which one silencer 22 is provided or may have a configuration in which a plurality of the silencers 22 are provided. Also, in a case in which the plurality of silencers 22 are provided, a configuration may be adopted in which different types of silencers 22 are provided. For example, the configuration may be adopted in which the Helmholtz resonator 22a and the air column resonator 22b.

Further, in a case in which the sound source SS generates two or more dominant sounds, the configuration may be adopted in which two or more silencers 22 for silencing the frequency band of each dominant sound are provided.

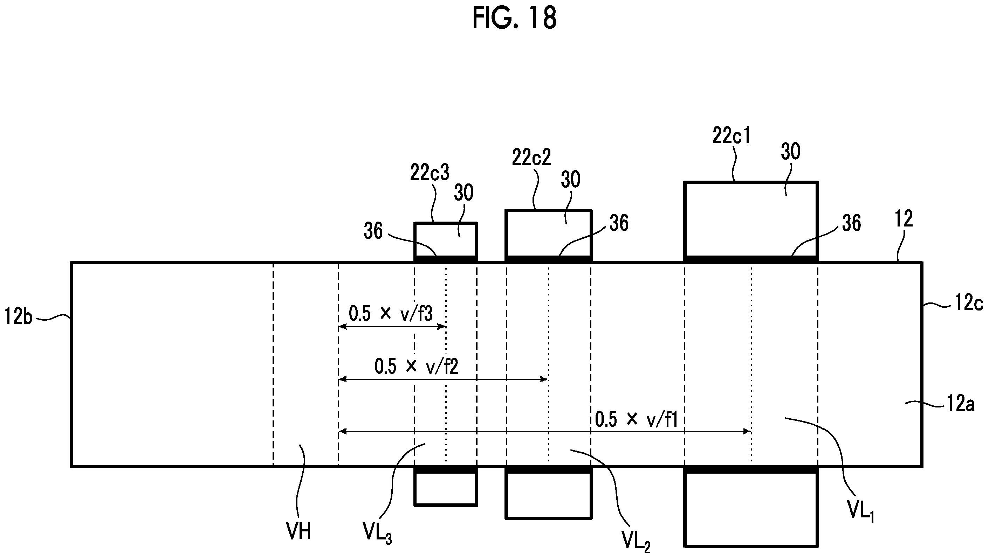

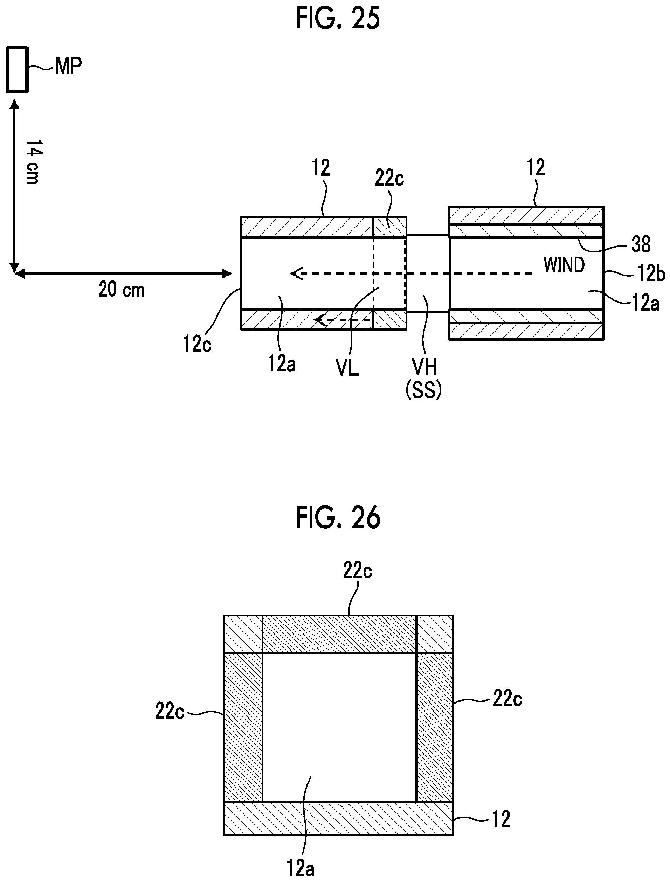

In this case, for the center wavelength of each dominant sound, each of the silencers 22 need only be disposed at a position which satisfies (0.5 × λ × m - 0.2 × λ) < L < (0.5 × λ × m + 0.2 × λ) (refer to Figs. 18 and 26).

Further, in the examples shown in Figs. 7 to 10, a configuration is adopted in which the silencer 22 is disposed on the outer peripheral portion of the ventilation member 12, but the present invention is not limited to this, and the silencer 22 may be disposed in the ventilation member 12 (ventilation passage 12a). In the case of the configuration in which the silencer 22 is disposed in the ventilation member 12 (ventilation passage 12a), it is preferable that the silencer be a resonance type silencer (Helmholtz resonator, air column resonator, film type resonator) or an extended silencer.

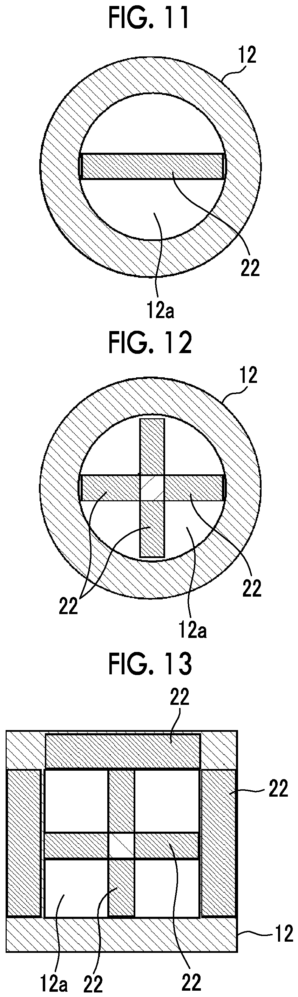

Figs. 11 to 14 are schematic diagrams showing still another examples of the soundproof system according to the embodiment of the present invention. Figs. 11 to 14 are cross sectional views perpendicular to the flow direction at the disposition position of the silencer 22.

In the example shown in Fig. 11, one silencer 22 is disposed in the ventilation passage 12a. As shown in Fig. 11, the silencer 22 is disposed not to entirely block the cross section of the ventilation passage 12a.

In a case in which the silencer 22 is disposed in the ventilation passage 12a as described above, the acoustic impedance in this region changes in the direction in which the acoustic impedance is low due to the effect of the silencer 22, but on the other hand, the cross section area of the ventilation passage 12a is reduced, so that the acoustic impedance changes in the direction of increasing.

Therefore, in a case in which the silencer 22 is disposed in the ventilation passage 12a, it is necessary to make the acoustic impedance of the region in which the silencer 22 is disposed low by appropriately setting the cross section area of the ventilation passage 12a, the cross section area of the silencer 22, and the strength or the frequency of the resonance in a case of using the resonator or the cross section area, the width, the type of the porous sound absorbing material disposed in the inside in a case of using the extended silencer.

On the other hand, in the case of the configuration in which the silencer 22 is disposed in the ventilation passage 12a, the silencer 22 can be disposed in the existing ventilation member 12 without redesigning or processing the ventilation member 12, and thus the sound silencing effect can be easily obtained.

Further, even in a case in which the silencer 22 is disposed in the ventilation passage 12a, a configuration may be adopted in which two or more silencers 22 are provided.

For example, in the example shown in Fig. 12, four silencers 22 are disposed in the ventilation passage 12a rotationally symmetrically with respect to the center of the ventilation passage 12a.

Further, as shown in Fig. 13, a configuration may be adopted in which the silencer 22 is disposed on the outer peripheral portion and inside (ventilation passage 12a) of the ventilation member 12.

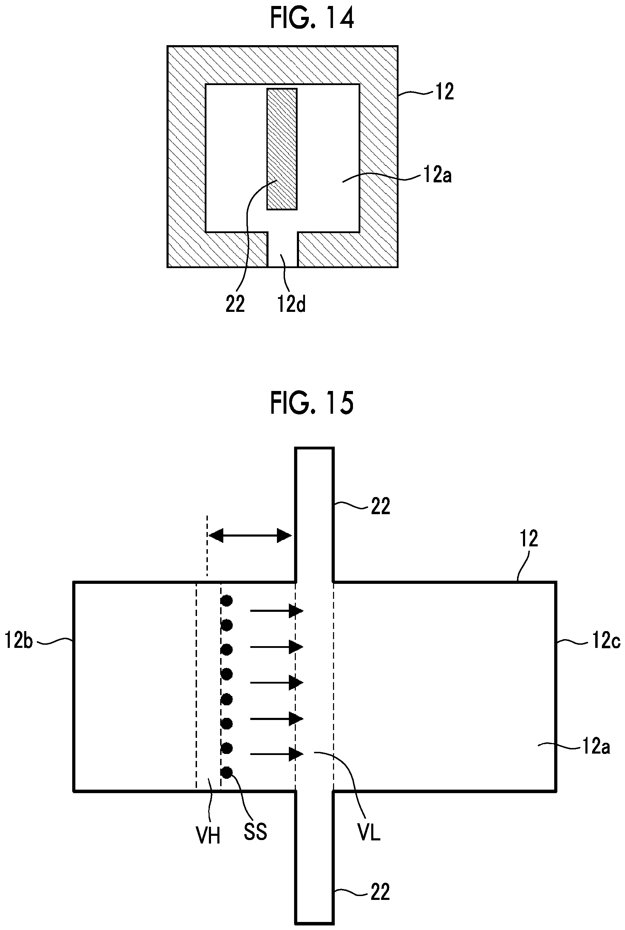

Further, as shown in Fig. 14, a hole penetrating the side surface of the ventilation member 12 may be provided. By providing the hole on the side surface, the silencer 22 can be inserted into the ventilation passage 12a through the hole and disposed.

### <Simulation>

Hereinafter, the effect of the soundproof system according to the embodiment of the present invention will be described using simulation.

For the simulation, the acoustic module of the finite element method calculation software COMSOL ver5.3 (COMSOL INC.) is used. As shown in Fig. 15, in the model of the soundproof system for simulation, a configuration is adopted in which the high impedance space VH and the sound source SS (eight point sound sources) are disposed adjacent to each other inside the ventilation member 12, and the silencer 22 is further disposed in the outer peripheral portion of the ventilation member 12. The sound source SS is eight point sound sources, and the eight point sound sources are arranged on the interface of the high impedance space VH.

In such a simulation model, the transmission loss is obtained by simulation by changing the distance between the high impedance space VH and the silencer 22 (that is, the low impedance space) in various ways.

In the simulation model, the ventilation member 12 has a cylindrical shape, the length is 25 cm, the radius of the ventilation passage 12a is 5 cm, and the cross section area is 78.5 cm². It is satisfied that the air density ρ = 1.29 kg/m³ and the speed of sound c = 340 m/s.

The high impedance space VH exists at a position 0 cm from the air supply opening 12b side of the ventilation member 12, has a thickness of 5 mm, and has a cross section area of 78.5 cm². In addition, the air density is set to 51.6 kg/m³ to form the high impedance space.

The sound source SS is positioned on the exhaust opening 12c side of the high impedance space VH, and the frequency of the generated sound (dominant sound) is 2150 Hz. The center wavelength λ in this case is 158 mm.

The silencer 22 has the cavity portion extending in a circumferential direction of the ventilation passage (that is, an annular shape), and is the air column resonator that generates sound wave vibration in the radial direction of the ventilation member 12, and is disposed between the high impedance space VH and the exhaust opening 12c. The depth of the air column resonator in the radial direction is 32 mm, the width of the opening portion is 5 mm, and the opening area is 15.7 cm². The air column resonator resonates at 2150 Hz.

Using such a simulation model, the sound wave is emitted from the sound source SS, and the amplitude of the sound wave reaching the exhaust opening 12c per unit volume is determined. The amplitude of the incident sound wave per unit volume is set to 1. The transmission loss is obtained from the ratio of the amplitude of the sound wave emitted from the sound source SS to the amplitude of the sound wave reaching the exhaust opening 12c.

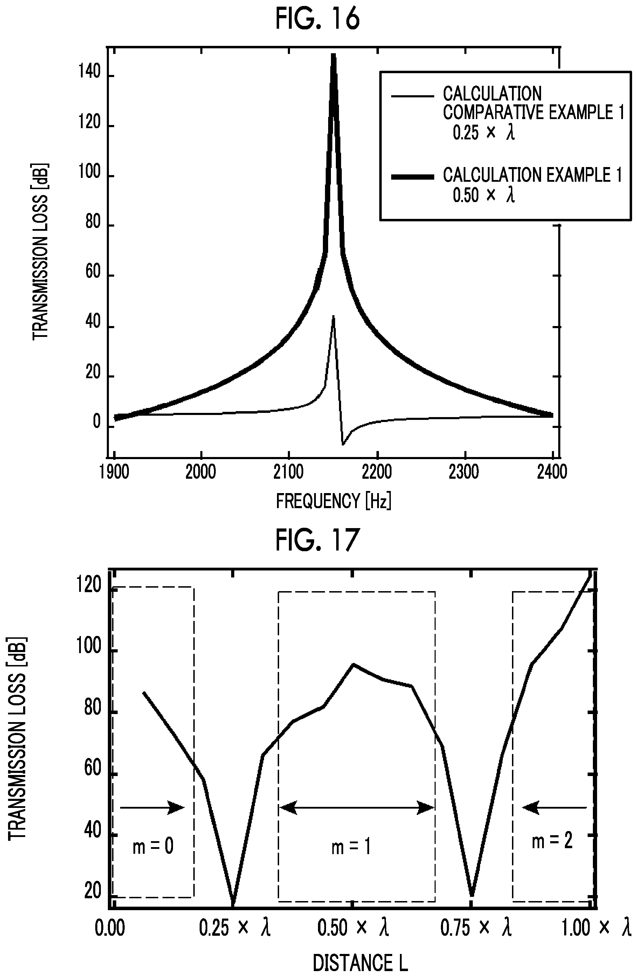

Fig. 16 shows a graph showing a relationship between the frequency and the transmission loss in a case in which the distance L between the high impedance space VH and the silencer 22 is 0.25 × λ (Calculation Comparative Example 1) and in a case in which the distance L between the high impedance space VH and the silencer 22 is 0.5 × λ (Calculation Example 1).

Furthermore, Fig. 17 shows a graph showing the relationship between the distance L between the high impedance space VH and the silencer 22 and the transmission loss at a frequency of 2150 Hz.

From Fig. 16, it is recognized that Calculation Example 1 in which the distance L is 0.5 × λ has a significantly high transmission loss as compared with Calculation Comparative Example 1 in which the distance L is 0.25 × λ, and has the high sound silencing effect with respect to the dominant sound.

Further, from Fig. 17, it is recognized that the transmission loss increases at the distance L in the range of (0.5 × λ - 0.2 × λ) < L < (0.5 × λ + 0.2 × λ), and the sound silencing effect with respect to the dominant sound is high.

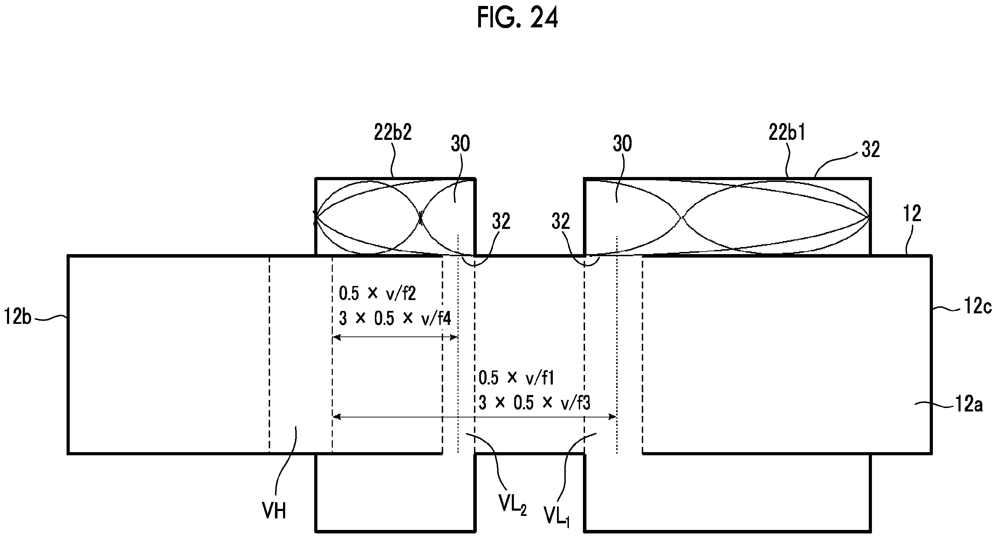

Here, as described above, in a case in which the sound source SS generates a plurality of dominant sounds, the configuration may be adopted in which two or more silencers 22 for silencing the frequency band of each dominant sound are provided. Hereinafter, this point will be described with reference to Figs. 18 and 24.

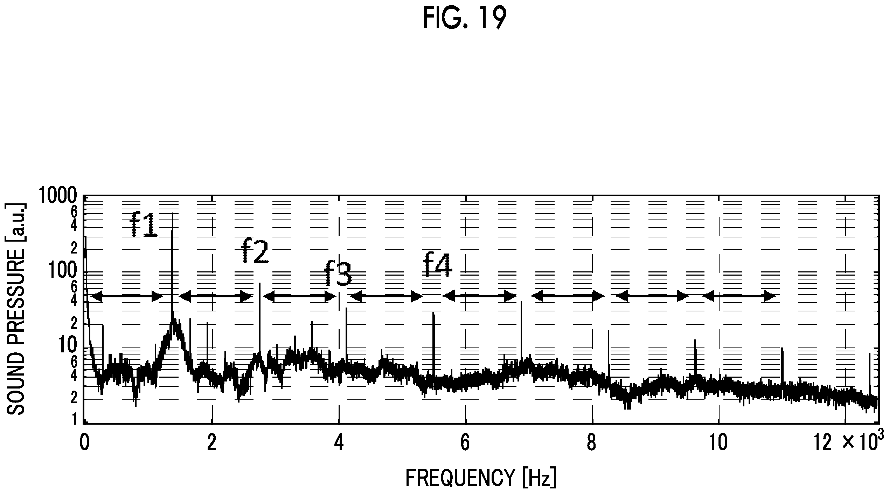

Fig. 19 is a graph showing the results of measuring the rotational noise of the fan used in Examples described below with a relationship between the frequency and the sound pressure. As recognized from Fig. 19, the fan generates the dominant sounds of which the sound pressure is the maximum value at the plurality of frequencies. Also, it is recognized that these frequencies of the dominant sounds are generated at equal intervals.

In a case in which the sound source SS generates a plurality of dominant sounds in this way, the silencer may be disposed in accordance with each dominant sound.

For example, in the example shown in Fig. 18, film type resonators 22c1 to 22c3 that silence the frequency bands of the dominant sounds of the frequencies f1, f2, and f3 of Fig. 18 are disposed on the outer peripheral portion of the ventilation member.

The film type resonator 22c1 is a silencer that silences the sound having the frequency f1. The wavelength at the frequency f1 is represented by v/f1, and thus the film type resonator 22c1 is disposed at a position of 0.5 × v/f1 from the high impedance space VH. Note that, v is the speed of sound.

The low impedance space VL₁ is formed in the region in which the film type resonator 22c1 is disposed.

The film type resonator 22c2 is a silencer that silences the sound having the frequency f2. The wavelength at the frequency f2 is represented by v/f2, and thus the film type resonator 22c2 is disposed at a position of 0.5 × v/f2 from the high impedance space VH.

The low impedance space VL₂ is formed in the region in which the film type resonator 22c2 is disposed.

The film type resonator 22c3 is a silencer that silences the sound having the frequency f3. The wavelength at the frequency f3 is represented by v/f3, and thus the film type resonator 22c3 is disposed at a position of 0.5 × v/f3 from the high impedance space VH.

The low impedance space VL₃ is formed in the region in which the film type resonator 22c2 is disposed.

In this way, the silencer that silences each dominant sound is disposed in the range in which the distance L from the high impedance space satisfies the relationship (0.5 × λ × m - 0.2 × λ) < L < (0.5 × λ × m + 0.2 × λ) with respect to the plurality of dominant sounds, and thus each dominant sound can be suitably silenced.

Further, in the example shown in Fig. 18, a configuration is adopted in which one silencer corresponding to one dominant sound is disposed, but the present invention is not limited to this, and a configuration may be adopted in which one silencer silences the plurality of dominant sounds.

As described above, the frequencies of the dominant sounds generated by the fan have equal intervals, and the frequency of the dominant sound is an integer multiple of the frequency of the lowest order dominant sound. Therefore, a configuration may be adopted in which the silencer is disposed at a position that satisfies the relationship of (0.5 × λ × m - 0.2 × λ) < L < (0.5 × λ × m + 0.2 × λ) with respect to the plurality of dominant sounds.

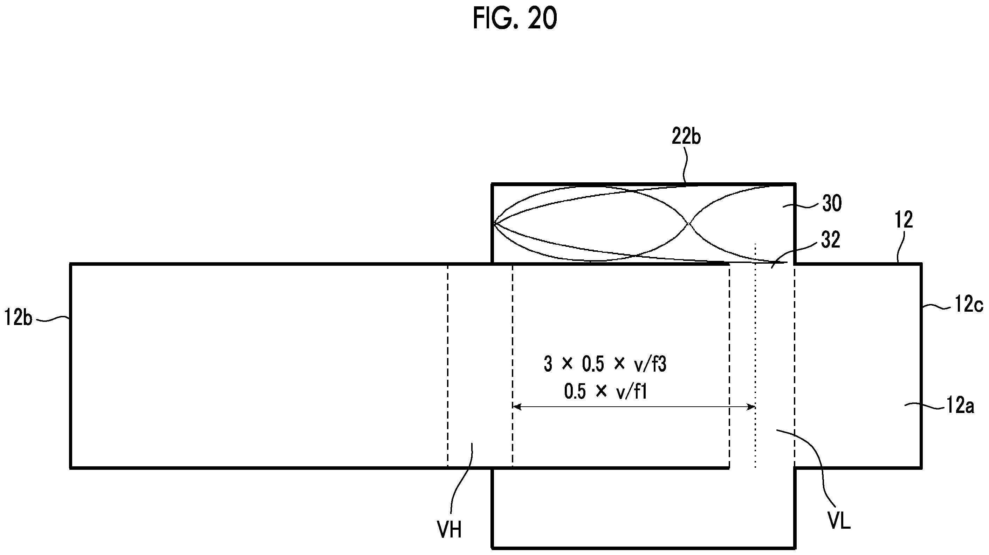

For example, in the example shown in Fig. 20, the air column resonator 22b is used as the silencer. The depth of the air column resonator 22b resonates with respect to the dominant sound of frequency f1 in a relationship of 1/2 wavelength, and resonates with respect to the dominant sound of frequency f3 in a relationship of 3/4 wavelength.

The air column resonator 22b is disposed at a position in which the distance L from the high impedance space is 0.5 × v/f1. Also, this position satisfies the relationship of 3 × 0.5 × v/f3.

Therefore, the air column resonator 22b can resonate at a plurality of frequencies to suitably silence the dominant sound at each frequency.

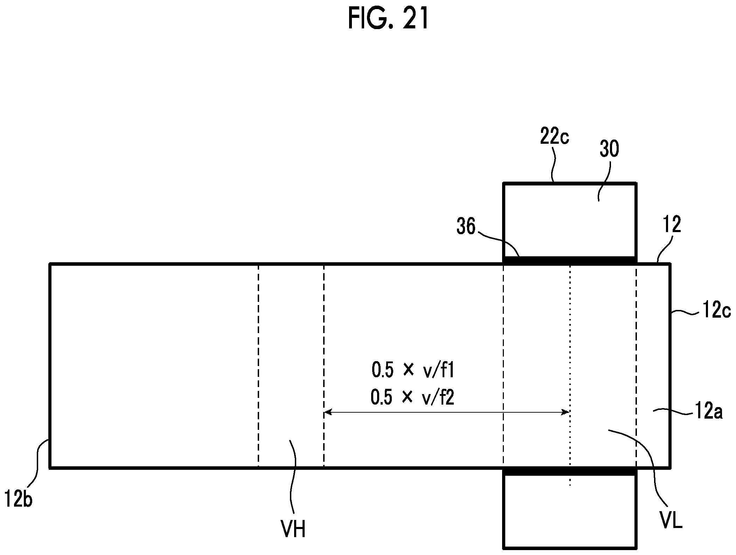

Further, in the example shown in Fig. 21, the film type resonator 22c is used as the silencer.

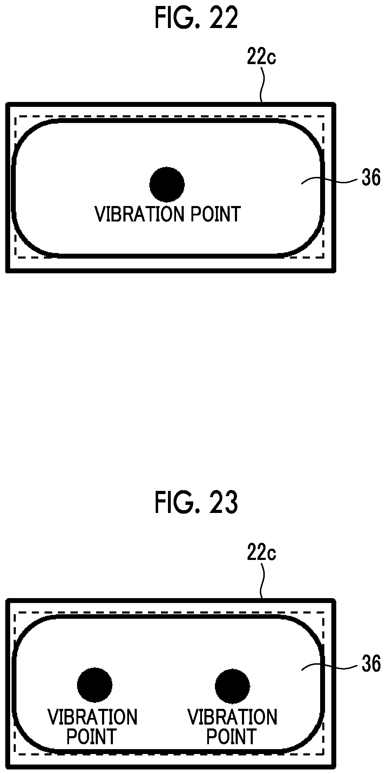

Figs. 22 and 23 are views of the film type resonator 22c as viewed from the film 36 side. The film type resonator 22c vibrates in a vibration mode showing the maximum amplitude at the center of the film 36 (vibration point in Fig. 22) as shown in Fig. 22 in the lowest order resonance mode. By matching the frequency of the film vibration in this case with the frequency f1 of the dominant sound, the sound of the frequency f1 is silenced.

On the other hand, the film type resonator 22c vibrates in a vibration mode showing the maximum amplitude at two points of the film 36 (two vibration points in Fig. 23) as shown in Fig. 23 in a secondary resonance mode. By matching the frequency of the film vibration in this case with the frequency f2 of the dominant sound, the sound of the frequency f2 is silenced.

Here, as shown in Fig. 21, the distance L of the film type resonator 22c from the high impedance space VH satisfies L = 0.5 × v/f1, and satisfies L = 2 × 0.5 × v/f2. Therefore, the dominant sounds of frequencies f1 and f2 can be suitably silenced.

Even in a case in which the film type resonator 22c is used as described above, the silencer can be disposed at a position in which one film type resonator 22c satisfies the relationship of (0.5 × λ × m - 0.2 × λ) < L < (0.5 × λ × m + 0.2 × λ) with respect to the plurality of dominant sounds to silence the dominant sound.

Further, the soundproof system according to the embodiment of the present invention may have a configuration in which a plurality of silencers are provided, and at least one silencer silences two or more dominant sounds.

For example, in the example shown in Fig. 24, two air column resonators 22b1 and 22b2 are provided as the silencer.

The air column resonator 22b1 has a depth that resonates with the dominant sound of frequencies f1 and f3, and is disposed at a position in which the distance L from the high impedance space VH satisfies L = 0.5 × v/f1, and satisfies L = 3 × 0.5 × v/f3.

Also, the air column resonator 22b2 has a depth that resonates with the dominant sound of frequencies f2 and f4, and is disposed at a position in which the distance L from the high impedance space VH satisfies L = 0.5 × v/f2, and satisfies L = 3 × 0.5 × v/f4.

In this way, a configuration is adopted in which a plurality of air column resonators 22b are provided, and each air column resonator 22b silences the plurality of dominant sounds and is disposed at a position satisfying the relationship of (0.5 × λ × m - 0.2 × λ) < L < (0.5 × λ × m + 0.2 × λ) with respect to each dominant sound, and thus it is possible to suitably silence the plurality of dominant sounds.

### Examples

Hereinafter, the present invention will be described in more detail with reference to examples. The materials, usage amounts, proportion, processing contents, processing procedures, and the like shown in the following examples can be appropriately changed within the scope of the claims. Therefore, the scope of the present invention should not be construed as being limited by the following examples.

### [Example 2 and Comparative Example 2]

The soundproof system schematically shown in Fig. 25 is manufactured.

The ventilation member 12 is formed by stacking a plurality of acrylic plates having a thickness of 10 mm and having an opening of 60 mm × 60 mm. As shown in Fig. 25, acrylic plates are stacked on both sides of the fan to interpose the fan (SanAce60 manufactured by Sanyo Denki Co., Ltd., thickness 38 mm, model number 9GA0612P1J03) to form the ventilation member 12. The length of the ventilation member 12 is 145 mm.

Further, a urethane sponge (sound absorbing material Calmflex F-2 manufactured by Inoac Corporation) 38 is attached to the inner surface of the ventilation member 12 on the air supply opening 12b side. As a result, the sound emitted from the intake opening 12b is reduced, and the sound emitted from the exhaust opening 12c can be measured more accurately.

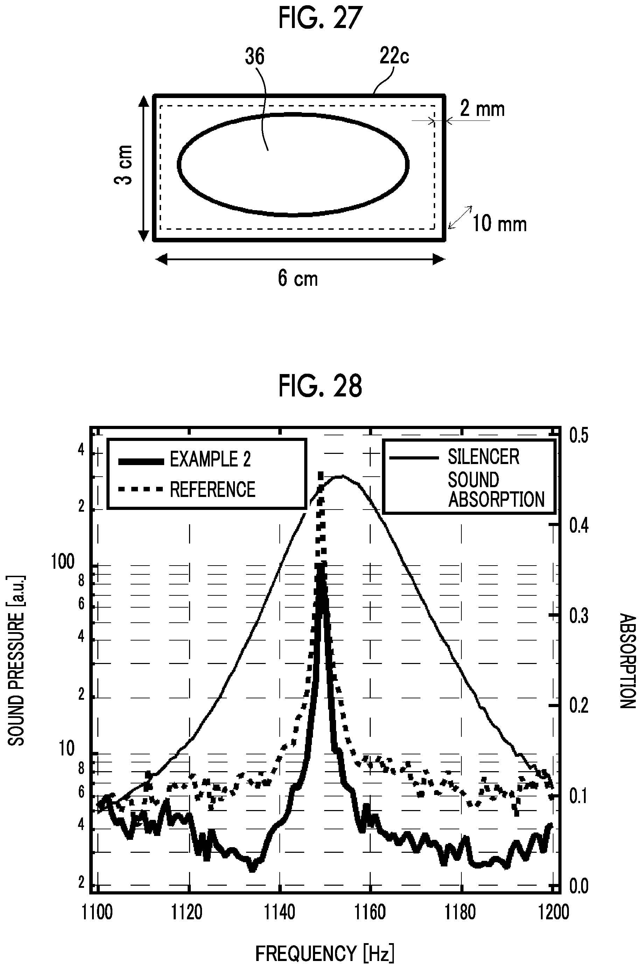

As the silencer, the film type silencer 22c is manufactured. As shown in Fig. 27, the film type silencer 22c has a cubic shape of 6 cm × 3 cm × 1 cm, and includes an opening portion having an elliptical shape (long axis 5.6 cm × short axis 2.6 cm) on one surface having a size of 6 cm × 3 cm, and the film 36 is vibratingly fixed to the opening portion. The frame of the film type silencer 22c is manufactured by combining acrylic plates having thickness of 2 mm. The film 36 is a polyethylene terephthalate (PET) film having thickness of 125 µm.

By replacing the manufactured film type silencer 22c with a part of the acrylic plates configuring the ventilation member 12, the film type silencer 22c is disposed on three surfaces of the outer peripheral portion of the ventilation member 12 such that the surface of the film 36 faces the ventilation passage 12a (Fig. 26). By changing the position of the acrylic plate to be replaced, the position of the film type silencer 22c can be changed.

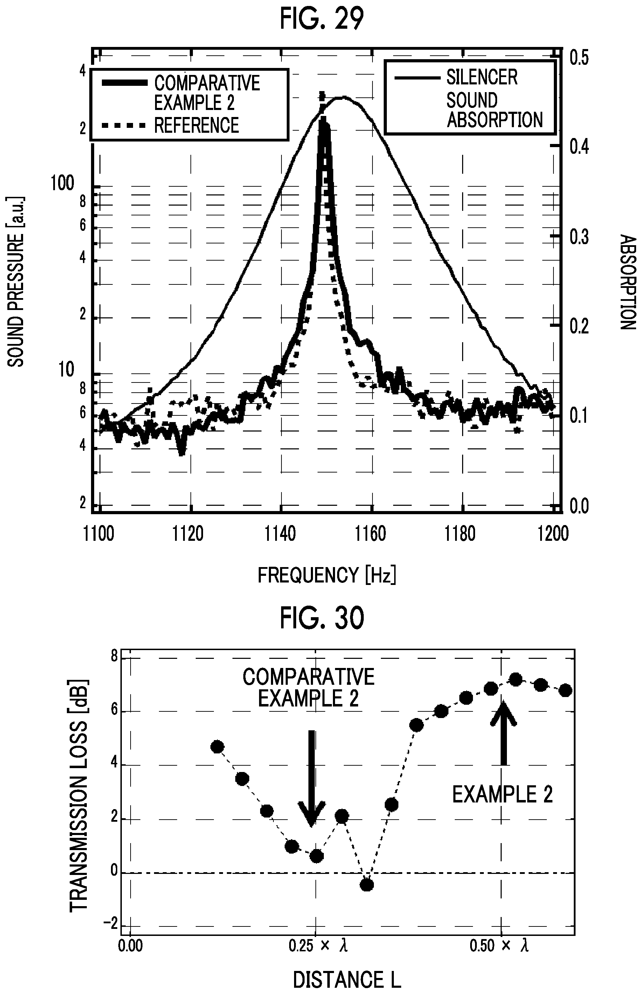

The relationship between the frequency and the absorbance of the film type silencer 22c alone is measured by the 4-microphone method using an acoustic pipe. This sound absorbance is measured according to JIS A 1405-2, and WinZac MTX manufactured by Nihon Onkyo Engineering Co., Ltd. can be used for the same measurement. The relationship between the frequency and the absorbance of the film type silencer 22c is shown in Figs. 28 and 29. As recognized from Fig. 28, the film type silencer 22c exhibits a high absorbance with respect to the frequency of dominant sound (about 1150 Hz).

After supplying electricity to rotate the fan, the sound pressure is measured with a microphone MP. The microphone MP is disposed at a position shifted from the exhaust opening 12c of the ventilation member 12 by 20 cm in the direction parallel to the flow direction and 14 cm in the direction orthogonal to the flow direction. Further, a current of 1.1 A is caused to flow into the fan, and one of the frequencies of the dominant sound generated by the flowed current is 1150 Hz.

In this soundproof system, the fan is the sound source SS, and the region in which the fan is disposed is the high impedance space VH.

Fig. 28 shows the relationship between the frequency and the sound pressure in a case in which the film type silencer 22c is disposed at a position of 0.5 × λ from the fan (high impedance space) (Example 2). Note that Fig. 28 also shows the relationship between the frequency and the sound pressure in a case in which the film type silencer 22c is not disposed as a reference.

Further, Fig. 29 shows the relationship between the frequency and the sound pressure in a case in which the film type silencer 22c is disposed at a position of 0.25 × λ from the fan (high impedance space) (Comparative Example 2). Note that Fig. 29 also shows the relationship between the frequency and the sound pressure as a reference.

From Figs. 28 and 29, it is recognized that in a case in which the film type silencer 22c is disposed at a position of 0.5 × λ from the fan (Example 2), the amount of decrease in sound pressure from the reference is large and the sound silencing effect is high as compared with a case in which the film type silencer 22c is disposed at a position of 0.25 × λ from the fan (Comparative Example 2).

Further, the sound pressure of the sound emitted from the exhaust opening 12c is measured by variously changing the position of the film type silencer 22c (distance L from the high impedance space). Fig. 30 shows a graph showing the relationship between the position of the film type silencer 22c and the transmission loss for sound having a frequency of 1150 Hz.

From Fig. 30, it is recognized that the transmission loss increases by disposing the film type silencer 22c in the vicinity of the position in which the distance L from the high impedance space is 0.5 × λ.

### [Example 3 and Comparative Example 3]

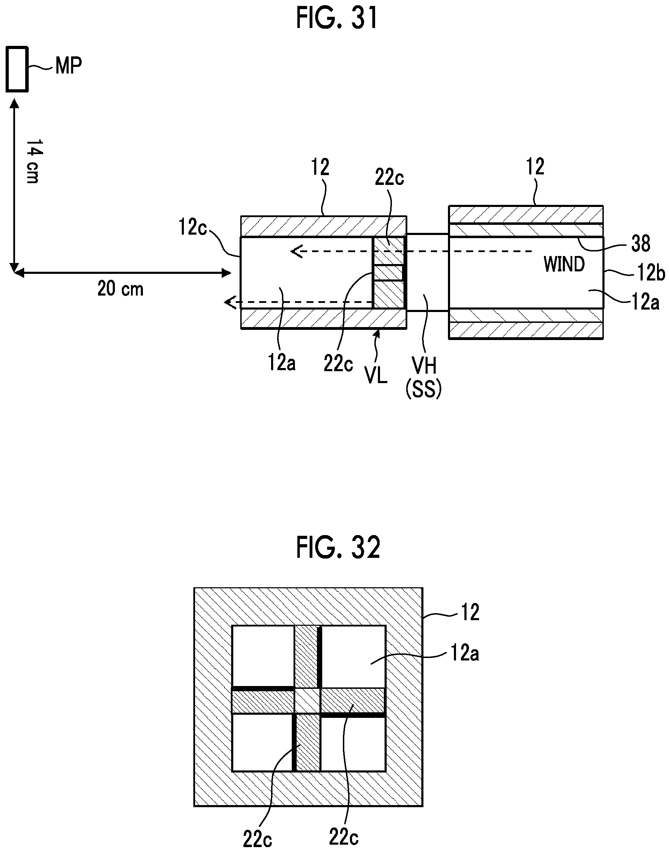

As shown in Figs. 31 and 32, a soundproof system having the same configuration as that of Example 2 except that the shape of the film type resonator 22c is changed and the film type resonator is disposed inside the ventilation member 12 is manufactured. Fig. 32 is a schematic cross sectional view of the ventilation member 12 at the position of the film type resonator 22c.

As shown in Fig. 32, a configuration is adopted in which the four film type resonators 22c are disposed rotationally symmetrically with respect to the center of the ventilation passage 12a. Further, as shown in Fig. 32, the film surface of the film type resonator 22c is disposed to be parallel to the flow direction.

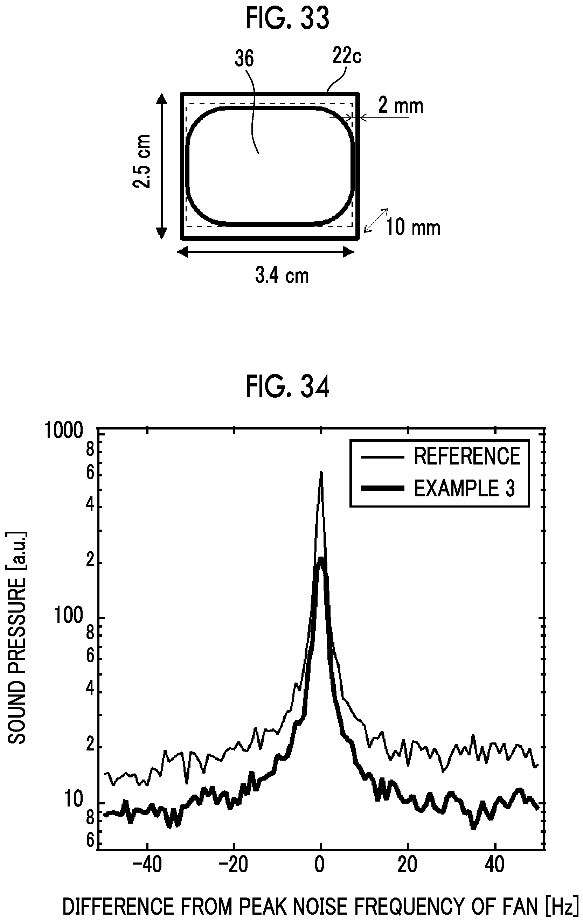

The shape of the film type resonator 22c in Example 3 and Comparative Example 3 is shown in Fig. 33.

The film type silencer 22c has a cubic shape of 3.4 cm × 2.5 cm × 1 cm, and includes an opening portion having a rectangular shape (3.0 cm × 2.1 cm) on one surface having a size of 3.4 cm × 2.5 cm with R (0.5 cm) at the corners, and the film 36 is vibratingly fixed to the opening portion. The frame of the film type silencer 22c is manufactured by combining acrylic plates having thickness of 2 mm. The film 36 is a polyethylene terephthalate (PET) film having thickness of 125 µm.

As described above, after supplying electricity to rotate the fan, the sound pressure is measured with a microphone MP. A current of 1.5 A is caused to flow into the fan, and one of the frequencies of the dominant sound generated by the flowed current is 1376 Hz.

Fig. 34 shows the relationship between the frequency (difference from the peak noise frequency of the fan) and the sound pressure in a case in which the film type silencer 22c is disposed at a position of 0.5 × λ from the fan (high impedance space) (Example 3). Note that Fig. 34 also shows the relationship between the frequency and the sound pressure in a case in which the film type silencer 22c is not disposed as a reference.

In Example 3, since the silencer is inserted inside the duct, the rotation of the fan is slowed due to the air resistance, and the noise peak shifts with respect to the reference. Therefore, in Figs. 33 and 34, the sound pressures of Example 3 (Comparative Example 3) and the reference are plotted with the frequency being the noise peak (peak noise frequency of the fan) as a reference and using the difference from the frequency being the noise peak as the lateral axis.

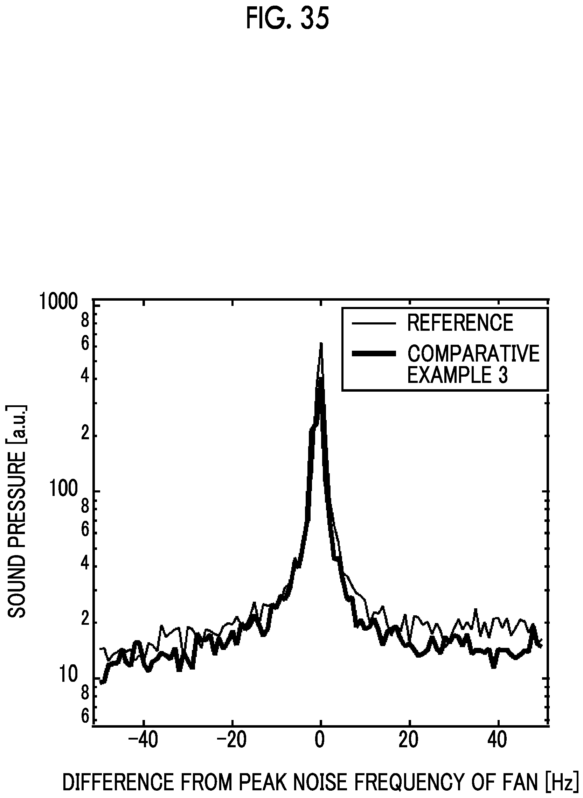

Further, Fig. 35 shows the relationship between the frequency (difference from the peak noise frequency of the fan) and the sound pressure in a case in which the film type silencer 22c is disposed at a position of 0.25 × λ from the fan (high impedance space) (Comparative Example 3). Note that Fig. 35 also shows the relationship between the frequency and the sound pressure as a reference.

From Figs. 34 and 35, it is recognized that in a case in which the film type silencer 22c is disposed at a position of 0.5 × λ from the fan (Example 3), the amount of decrease in sound pressure from the reference is large and the sound silencing effect is high as compared with a case in which the film type silencer 22c is disposed at a position of 0.25 × λ from the fan (Comparative Example 3).

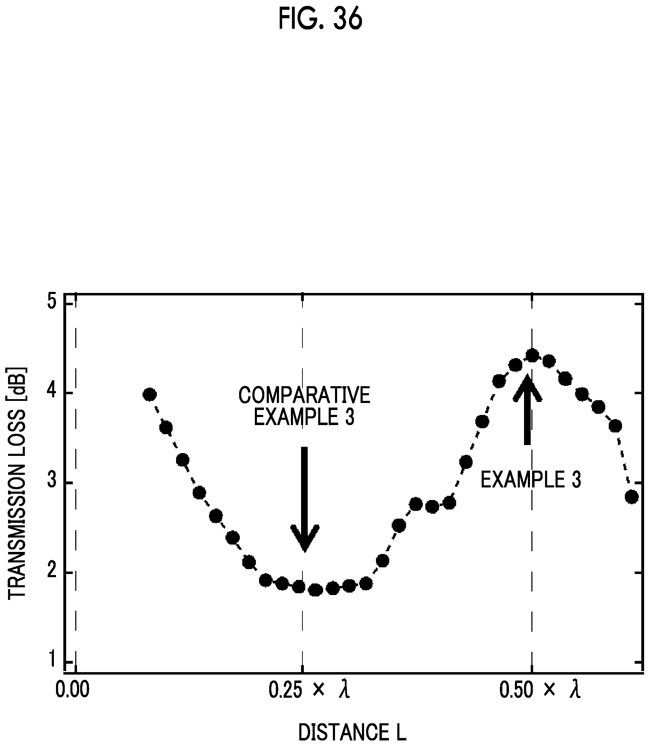

Further, the sound pressure of the sound emitted from the exhaust opening 12c is measured by variously changing the position of the film type silencer 22c (distance L from the high impedance space). Fig. 36 shows a graph showing the relationship between the position of the film type silencer 22c and the transmission loss for sound having a frequency of 1376 Hz.

From Fig. 36, it is recognized that the transmission loss increases by disposing the film type silencer 22c in the vicinity of the position in which the distance L from the high impedance space is 0.5 × λ.

From the above results, the effect of the present invention is clear.

### Explanation of References

10: soundproof system
12: ventilation member
12a: ventilation passage
12b: air supply opening
12c: exhaust opening
22: silencer
22a: Helmholtz resonator
22b, 22b1, 22b2: air column resonator
22c, 22c1 to 22c3: film type resonator
22d: non-resonant silencer
24: porous sound absorbing material
30: cavity portion
32: opening portion
36: film
38: urethane
60: fan
VH: high impedance space
VL: low impedance space
SS: sound source

## Claims

1. A soundproof system (10) comprising a ventilation member (12) and a sound source (SS) disposed in the ventilation member (12), the ventilation member (12) having a ventilation passage (12a),
wherein a sound generated from the sound source (SS) is at least one dominant sound of which a sound pressure at a specific frequency is a maximum value,
**characterised in that**
at least a part of a high impedance space (VH) in which an acoustic impedance is higher than an average value of an acoustic impedance of the ventilation passage (12a) exists within a distance of ± 0.25 × λ of the sound source (SS) in a flow direction of the ventilation passage (12a),
the high impedance space (VH) is a region in which a cross section area of the ventilation passage (12a) is narrowed, the region being formed at a position separated from the sound source (SS) in the flow direction of the ventilation passage (12a),
the soundproof system (10) comprises a silencer (22) that is disposed in the ventilation member (12) and silences a sound in a frequency band including a frequency of the dominant sound,
the silencer (22) forms a low impedance space (VL) in which the acoustic impedance is lower than the average value of the acoustic impedance of the ventilation passage (12a), and
assuming that a center wavelength of the dominant sound is λ and m is a positive integer, a distance L between the high impedance space (VH) and the low impedance space (VL) satisfies (0.5 × λ × m - 0.2 × λ) < L < (0.5 × λ × m + 0.2 × λ).

2. The soundproof system (10) according to claim 1, wherein the distance L between the high impedance space (VH) and the low impedance space (VL) satisfies (0.5 × λ - 0.2 × λ) < L < (0.5 × λ + 0.2 × λ).

3. The soundproof system (10) according to claim 1 or 2,
wherein the sound source (SS) generates two or more dominant sounds having different frequencies, and
two or more silencers (22) that silence each of the two or more dominant sounds are provided.

4. The soundproof system (10) according to any one of claims 1 to 3, wherein the silencer (22) is a resonator.

5. The soundproof system (10) according to any one of claims 1 to 4, wherein the silencer (22) includes a porous sound absorbing material (24).

## Patentansprüche

1. Schalldämpfungssystem (10), das ein Belüftungselement (12) und eine Schallquelle (SS), die in dem Belüftungselement (12) angeordnet ist, umfasst, wobei das Belüftungselement (12) einen Belüftungskanal (12a) aufweist,
wobei ein Schall, der von der Schallquelle (SS) erzeugt wird, mindestens ein dominanter Schall ist, von dem ein Schalldruck bei einer spezifischen Frequenz ein Maximalwert ist,
**dadurch gekennzeichnet, dass**
mindestens ein Teil eines Raums (VH) mit hoher Impedanz, in dem eine akustische Impedanz höher als ein Durchschnittswert einer akustischen Impedanz des Belüftungskanals (12a) ist, innerhalb einer Entfernung von ± 0,25 × λ der Schallquelle (SS) in einer Strömungsrichtung des Belüftungskanals (12a) existiert,
der Raum (VH) mit hoher Impedanz ein Bereich ist, in dem eine Querschnittsfläche des Belüftungskanals (12a) verengt ist, wobei der Bereich an einer Position, die von der Schallquelle (SS) in der Strömungsrichtung des Belüftungskanals (12a) getrennt ist, gebildet ist,
das Schalldämpfungssystem (10) einen Schalldämpfer (22) umfasst, der in dem Belüftungselement (12) angeordnet ist und einen Schall in einem Frequenzband, das eine Frequenz des dominanten Schalls enthält, dämpft,
der Schalldämpfer (22) einen Raum (VL) mit niedriger Impedanz bildet, in dem die akustische Impedanz niedriger als der Durchschnittswert der akustischen Impedanz des Belüftungskanals (12a) ist, und
unter der Annahme, dass eine Mittelpunktwellenlänge des dominanten Schalls λ ist und m eine positive ganze Zahl ist, eine Entfernung L zwischen dem Raum (VH) mit hoher Impedanz und dem Raum (VL) mit niedriger Impedanz (0,5 × λ × m - 0,2 × λ) < L < (0,5 × λ × m + 0,2 × λ) erfüllt.

2. Schalldämpfungssystem (10) nach Anspruch 1, wobei die Entfernung L zwischen dem Raum (VH) mit hoher Impedanz und dem Raum (VL) mit niedriger Impedanz (0,5 × λ - 0,2 × λ) < L < (0,5 × λ + 0,2 × λ) erfüllt.

3. Schalldämpfungssystem (10) nach Anspruch 1 oder 2,
wobei die Schallquelle (SS) zwei oder mehr dominante Schalle mit unterschiedlichen Frequenzen erzeugt, und
zwei oder mehr Dämpfer (22), die jedes der zwei oder mehr dominanten Schallen dämpft, vorgesehen sind.

4. Schalldämpfungssystem (10) nach einem der Ansprüche 1 bis 3, wobei der Schalldämpfer (22) ein Resonator ist.

5. Schalldämpfungssystem (10) nach einem der Ansprüche 1 bis 4, wobei der Schalldämpfer (22) ein poröses schallabsorbierendes Material (24) enthält.

## Revendications

1. Système insonorisant (10) comprenant un élément de ventilation (12) et une source sonore (SS) disposée dans l'élément de ventilation (12), l'élément de ventilation (12) ayant un passage de ventilation (12a),
dans lequel un son généré par la source sonore (SS) est au moins un son dominant dont une pression acoustique à une fréquence spécifique est une valeur maximale,
**caractérisé en ce que**
au moins une partie d'un espace à haute impédance (VH) dans lequel une impédance acoustique est supérieure à une valeur moyenne d'une impédance acoustique du passage de ventilation (12a) existe à une distance de ± 0,25 × λ de la source sonore (SS) dans une direction d'écoulement du passage de ventilation (12a),
l'espace à haute impédance (VH) est une région dans laquelle une section transversale du passage de ventilation (12a) est rétrécie, la région étant formée à une position séparée de la source sonore (SS) dans la direction d'écoulement du passage de ventilation (12a),
le système insonorisant (10) comprend un silencieux (22) qui est disposé dans l'élément de ventilation (12) et qui atténue un son dans une bande de fréquences incluant une fréquence du son dominant,
le silencieux (22) forme un espace à basse impédance (VL) dans lequel l'impédance acoustique est inférieure à la valeur moyenne de l'impédance acoustique du passage de ventilation (12a), et
en supposant qu'une longueur d'onde centrale du son dominant soit λ et que m soit un entier positif, une distance L entre l'espace à haute impédance (VH) et l'espace à basse impédance (VL) satisfait à (0,5 × λ × m - 0,2 × λ) < L < (0,5 × λ × m + 0,2 × λ).

2. Système insonorisant (10) selon la revendication 1, dans lequel la distance L entre l'espace à haute impédance (VH) et l'espace à basse impédance (VL) satisfait à (0,5 × λ - 0,2 × λ) < L < (0,5 × λ + 0,2 × λ).

3. Système insonorisant (10) selon la revendication 1 ou la revendication 2,
dans lequel la source sonore (SS) génère deux ou plusieurs sons dominants ayant des fréquences différentes, et
deux ou plusieurs silencieux (22) qui atténuent chacun des deux ou plusieurs sons dominants sont prévus.

4. Système insonorisant (10) selon l'une quelconque des revendications 1 à 3, dans lequel le silencieux (22) est un résonateur.

5. Système insonorisant (10) selon l'une quelconque des revendications 1 à 4, dans lequel le silencieux (22) inclut un matériau poreux absorbant du son (24).
